# EUROPEAN PATENT SPECIFICATION

(11) **EP 4 437 461 B1**
(45) Date of publication and mention of the grant of the patent: **07.10.2026**
(21) Application number: 23796728.6
(22) Date of filing: 24.04.2023
(51) Int. Cl.: G06N 3/098, G06N 3/092, G06N 3/045, G06N 3/084, G06N 3/006

(54) **OPTIMAL SPLIT FEDERATED LEARNING IN WIRELESS NETWORK**
OPTIMALES GETEILTES FÖDERIERTES LERNEN IN EINEM DRAHTLOSEN NETZWERK
APPRENTISSAGE FÉDÉRÉ DIVISÉ OPTIMAL DANS UN RÉSEAU SANS FIL

(30) Priority: 27.04.2022 IN 202241024705; 17.04.2023 IN 202241024705
(43) Date of publication of application: 02.10.2024
(73) Proprietor: Samsung Electronics Co., Ltd., Suwon-si, Gyeonggi-do 16677 (KR)
(72) Inventor: KARJEE, Jyotirmoy, Suwon-si, Gyeonggi-do, 16677 (KR); S, Praveen Naik, Suwon-si, Gyeonggi-do, 16677 (KR); NAGARAJA RAO, Srinidhi, Suwon-si, Gyeonggi-do, 16677 (KR); YIP, Eric Ho Ching, Suwon-si, Gyeonggi-do, 16677 (KR); CHAKRABORTY, Prasenjit, Suwon-si, Gyeonggi-do, 16677 (KR); DABBIRU, Ramesh Babu Venkat, Suwon-si, Gyeonggi-do, 16677 (KR)
(74) Representative: Gulde & Partner
(86) International application number: PCT/KR2023/005530
(87) International publication number: WO 2023/211081

(56) References cited:
- CN-A- 113 497 785
- CN-A- 113 657 471
- CN-A- 114 169 537
- US-A1- 2020 311 546
- WEN WU ET AL: "Split Learning over Wireless Networks: Parallel Design and Resource Management", ARXIV.ORG, CORNELL UNIVERSITY LIBRARY, 201 OLIN LIBRARY CORNELL UNIVERSITY ITHACA, NY 14853, 18 April 2022 (2022-04-18), XP091205323
- HUAI ZHIBO ET AL: "Towards Deep Learning on Resource-Constrained Robots: A Crowdsourcing Approach with Model Partition", 2019 IEEE SMARTWORLD, UBIQUITOUS INTELLIGENCE & COMPUTING, ADVANCED & TRUSTED COMPUTING, SCALABLE COMPUTING & COMMUNICATIONS, CLOUD & BIG DATA COMPUTING, INTERNET OF PEOPLE AND SMART CITY INNOVATION (SMARTWORLD/SCALCOM/UIC/ATC/CBDCOM/IOP/SCI), IEEE, 19 August 2019 (2019-08-19), pages 989 - 994, XP033747602, DOI: 10.1109/SMARTWORLD-UIC-ATC-SCALCOM-IOP-SCI.2019.00194
- HAN CHENGZHUO ET AL: "Privacy Protection Technology of Maritime Multi-agent Communication Based on Part-Federated Learning", 2021 IEEE/CIC INTERNATIONAL CONFERENCE ON COMMUNICATIONS IN CHINA (ICCC WORKSHOPS), IEEE, 28 July 2021 (2021-07-28), pages 266 - 271, XP033976953, DOI: 10.1109/ICCCWORKSHOPS52231.2021.9538897
- KARJEE JYOTIRMOY ET AL: "Dynamic Split Computing of PoseNet Inference for Fitness Applications in Home IoT-Edge Platform", 2022 14TH INTERNATIONAL CONFERENCE ON COMMUNICATION SYSTEMS & NETWORKS (COMSNETS), IEEE, 4 January 2022 (2022-01-04), pages 430 - 432, XP034067119, DOI: 10.1109/COMSNETS53615.2022.9668605
- KO JONG HWAN ET AL: "Edge-Host Partitioning of Deep Neural Networks with Feature Space Encoding for Resource-Constrained Internet-of-Things Platforms", 2018 15TH IEEE INTERNATIONAL CONFERENCE ON ADVANCED VIDEO AND SIGNAL BASED SURVEILLANCE (AVSS), IEEE, 27 November 2018 (2018-11-27), pages 1 - 6, XP033518237, DOI: 10.1109/AVSS.2018.8639121
- KARJEE JYOTIRMOY ET AL: "Split Federated Learning and Reinforcement based Codec Switching in Edge Platform", 2023 IEEE INTERNATIONAL CONFERENCE ON CONSUMER ELECTRONICS (ICCE), IEEE, 6 January 2023 (2023-01-06), pages 1 - 6, XP034297642, DOI: 10.1109/ICCE56470.2023.10043412
- ZHOU HONGBO, ZHANG WEIWEI, WANG CHENGWEI, MA XIN, YU HAORAN: "BBNet: A Novel Convolutional Neural Network Structure in Edge-Cloud Collaborative Inference", SENSORS, vol. 21, no. 13, pages 4494, XP093104643, DOI: 10.3390/s21134494

## Description

### [Technical Field]

The present disclosure relates to techniques for optimizing Artificial Intelligence (Al) or Machine Learning (ML) models. The present disclosure particularly relates to optimal split federated learning and Reinforcement Learning based Codec Switching (RLCS) in the edge device platform.

### [Background Art]

In general, Al/ML models may be configured to process data. For example, Al/ML models may be used to predict or determine inference for data. The Al/ML models may be built using sample data (which may be referred to as "training data"). A centralized Al/ML framework may refer to a setup for processing the data. A computation used for training the Al/ML model on a single device or a cluster of devices may be managed by a central server of the centralized Al/ML framework. In the centralized Al/ML framework, the data may be collected and stored on a central server, which may be referred as an edge device or a cloud device, and data training may be performed on the central server or the cluster device. In general, training of large datasets may be performed using powerful servers edge device or the cloud device. The edge device may update the Al/ML model parameters to transmit the dataset from a client device (for example internet of things (IoT) devices, smartphones, etc.) to the edge device to perform the training. The transmission of the data or a large dataset from the client device to the edge device for training the dataset may be expensive in terms of bandwidth and latency and can pose privacy issues while using private or confidential datasets.

To mitigate the problem, a Federated Learning (FL) process may be used to transfer the AI/ML model from the edge device to a client data location instead of transferring the data to the AI/ML model located at the server. The AI/ML model may be partitioned into two or more sub-models (which may be referred to as sub-networks) among the client devices and the server device. In a Split Federated Learning (SFL) model, a process of partitioning the AI/ML framework among the client devices and the edge devices may be unclear. To mitigate this issue, there is a need for a process for transferring the AI/ML model from the edge device to the client data location, and there is a need for a partitioning process for the SFL approach.

WEN WU ET AL: "Split Learning over Wireless Networks: Parallel Design and Resource Management", ARXIV.ORG, CORNELL UNIVERSITY LIBRARY, 201 OLIN LIBRARY CORNELL UNIVERSITY ITHACA, NY 14853, 18 April 2022, discloses a SL scheme to reduce the training latency, named Cluster-based Parallel SL (CPSL) which conducts model training in a "first-parallel-then-sequential" manner.

### [Disclosure]

### [Technical Solution]

The present invention is defined by the appended set of claims. Preferred embodiments are defined by the dependent claims. Provided is a method for optimal split federated learning by a federal device.

Additional aspects will be set forth in part in the description which follows and, in part, will be apparent from the description, or may be learned by practice of the presented embodiments.

In accordance with an aspect of the disclosure, a method for optimal split federated learning (O-SFL) in a wireless network includes receiving, by a federal device in the wireless network, local split points associated with a deep neural network (DNN) model over a time period from at least one client device of a plurality of client devices, wherein the plurality of client devices are connected to an edge device for training the DNN model using split federated learning (SFL); determining, by the federal device, an average of the local split points; determining, by the federal device, a global split point for partitioning the DNN model between the at least one client device and the edge device based on the average of the local split points; and applying, by the federal device, the determined global split point to train the DNN model.

The applying of the determined global split point may include: sending, by the federal device, the global split point for partitioning the DNN model to the at least one client device; uniformly splitting, by the federal device, a plurality of layers of the DNN model between the at least one client device and the edge device, based on the global split point for partitioning the DNN model; and loading, by the federal device, a corresponding split DNN model on the at least one client device and the edge device.

The local split points are determined based on a network bandwidth for communication between the at least one client device and the edge device.

The method may further include: receiving, by the federal device, a training dataset split between the at least one client device; and applying, by the federal device, the corresponding split DNN model using a split training dataset.

In accordance with an aspect of the disclosure, a forward propagation may be performed by the at least one client device using the training dataset and the corresponding split DNN model, a partial output of the corresponding split DNN model may be determined by the at least one client device based on the forward propagation, and the partial output may be sent by the at least one client device to the edge device.

The method may further include: performing, by the federal device, a forward propagation for applying the global split point and a backward propagation using the corresponding split DNN model at the edge device during the training of the DNN model; and updating, by the federal device, a plurality of global model parameters associated with the DNN model during the training of the DNN model.

The method may further include: selecting, by the at least one client device, an optimal codec for offloading the data from the at least one client device to the edge device, based on the determined global split point resulting in full offload, wherein the optimal codec is selected based on network bandwidth using a reinforcement learning based codec switching (RLCS) mechanism; and offloading, by the at least one client device, the data from the at least one client device to the edge device using the selected optimal codec.

The method may further include: determining, by the federal device, whether an output rate of at least one codec is within a throughput threshold, wherein the throughput threshold is determined based on the network bandwidth of the at least one client device; based on determining that the output rate of the at least one codec is within the throughput threshold, assigning a reward to the at least one client device; and based on determining that the output rate of the at least one codec is not within the throughput threshold, assigning a penalty to the at least one client device.

In accordance with an aspect of the disclosure, a system for performing optimal split federated learning (O-SFL) in a wireless network includes: an edge device; a client device; and a federal device including: a memory; a processor coupled to the memory; a communicator coupled to the memory and the processor; a federal device controller coupled to the memory, the processor and the communicator; and a global split point manager coupled to the memory, the processor, the communicator, and the federal device controller, wherein the federal device is configured to: receive local split points associated with a deep neural network (DNN) model over a time period from at least one client device of a plurality of client devices, wherein the plurality of client devices are connected to the federal device for training the DNN model using split federated learning(SFL); determine an average of the local split points; determine a global split point for partitioning the DNN model between the at least one client device and the edge device based on the average of the local split points; and apply the determined global split point to train the DNN model.

To determine the global split point, the federal device may be further configured to: send the global split point for partitioning the DNN model to the at least one client device; uniformly split a plurality of layers of the DNN model between the at least one client device and the edge device, based on the global split point; and load a corresponding split DNN model on the at least one client device and the edge device.

The federal device is further configured to determine the local split points based on a network bandwidth for communication between the at least one client device and the edge device.

The federal device may be further configured to: split a training dataset between the at least one client device; and apply the corresponding split DNN model using a split training dataset.

The client device may be configured to: perform a forward propagation using the training dataset and the corresponding split DNN model; determine a partial output of the corresponding split DNN model based on the forward propagation; and send the partial output to the edge device.

The edge device may be configured to: perform a forward propagation for applying the global split point associated with the DNN model and a backward propagation using the corresponding split DNN model at the edge device during the training of the DNN model; and update a plurality of global model parameters associated with the DNN model during the training of the DNN model.

The federal device may be further configured to select an optimal codec for offloading the data from the at least one client device to the edge device, when the determined global split point results in full offload, wherein the optimal codec is selected based on network bandwidth using a reinforcement learning based codec switching (RLCS) mechanism, and the at least one client device may be configured to offload data from the at least one client device to the edge device using the selected optimal codec.

These and other aspects of the embodiments herein will be better appreciated and understood when considered in conjunction with the following description and the accompanying drawings. It should be understood, that the following descriptions, while indicating some embodiments and numerous specific details thereof, are given by way of illustration and not of limitation. Many changes and modifications may be made within the scope of the embodiments herein without departing from the scope of the present invention as defined by the appended set of claims, and the embodiments herein include all such modifications.

### [Description of Drawings]

The above and other features, aspects, and advantages of the present disclosure will be more apparent from the following description taken in conjunction with the accompanying drawings, in which:
FIG. 1A is block diagram illustrating a system for performing Optimal Split Federated Learning (O-SFL), according to embodiments;
FIG. 1B is a block diagram illustrating an example of AI/ML model transfer, according to embodiments;
FIG. 2 is a flow diagram illustrating the O-SFL method at time t=0, according to embodiments;
FIG. 3 is a graph illustrating a Reinforcement Learning based Codec Switching (RLCS) process for Long-Term Evolution (LTE) connectivity, according to embodiments;
FIG. 4 is a graph illustrating the RLCS process for Wireless Fidelity (Wi-Fi) connectivity, according to embodiments;
FIG. 5 is a block diagram of a federal device for determining a split point based on network bandwidth for the O-SFL, according to embodiments; and
FIG. 6 is a flow chart illustrating the O-SFL method in a wireless network, according to embodiments.

### [Mode for Invention]

Embodiments of the present disclosure and various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, may refer to a non-exclusive or unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks that carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware and software. The circuits may, for example, be embodied in one or more semiconductor chips, or on substrate supports such as printed circuit boards and the like. The circuits included in a block may be implemented by dedicated hardware, a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

Embodiments relate to a process for performing Optimal Split Federated Learning (O-SFL) by an edge device to determine the optimal split of a deep neural network (DNN) model based on network bandwidth. In some embodiments, the edge device may include, may be included in, or may be referred to as a server device.

Embodiments also relate to a Reinforcement Learning based Codec Switching (RLCS) process for a-priori detection of a suitable codec (or optimal codec) based on current network bandwidth conditions.

For example, embodiments may relate to a method for performing O-SFL using a federal device. The method includes receiving local split points associated with a DNN model over a time period from client devices, and the client devices may be connected to the edge device for training the DNN model in the SFL and determining an average of the local split points associated with the DNN model from the client devices over the time period. Further, the method may include determining a global split point for partitioning the DNN model between the client device and the edge device based on the average of the local split points and applying the determined global split point for partitioning the DNN model between the client device and the edge device to train the DNN model.

Some approaches for training artificial intelligence (AI) and machine learning (ML) models may include federated learning (FL) processes and split learning (SL) processes. The FL and SL processes may be used to enable Al/ML model training without accessing data on the client devices. A learning performance of the SL process may be better than the FL process under an imbalanced data distribution, but less favorable than the FL process under a data distribution which is not an independent and identically distributed (IID) data distribution. The data may be, but is not limited to, image data, speech data, text data, and sensor data. The FL and SL processes may be combined to form an SFL process to leverage each of the benefits (for example, faster training time than the SL process). Two optimization methods may be applied to the SFL process. For example, a first method may involve generalizing the SFL process by determining the possibility of a hybrid type of model training server-side (e.g., by the edge device) to better fit a large-scale device and to substantially reduce communication overhead (nearly by 4 times) of the generalized SFL process. In some examples of SFL processes, the AI/ML model may be randomly partitioned among the client devices and the edge devices or server device to train layers of an Al/ML sub-network, while most layers may reside in the edge devices or server devices. Therefore, there is a need for and Al/ML model that finds the optimal split in the FL process for the client-server architecture based on parameters such as, but is not limited to, bandwidth (or any other parameter such as received signal strength indicator (RSSI), energy, etc.).

According to embodiments, an adaptive stream manager may monitor the parameter of a user terminal or client device and predict a future value of the parameter of the client device. The adaptive stream manager may also select target characteristics, based on the predicted future value of the parameter of the client device, and request a multimedia segment having the target characteristic from a media server of the server device. Some embodiments may allow switching from one codec scheme to another codec scheme based on network conditions to fully utilize bandwidth and save the overall power consumption of the client device.

In some embodiments, at specific locations, the federal device of each client device may continue to train a local copy of a global Al/ML model on local media data (e.g., local image data and/or local video data). The federal device may be placed in the client device or may be placed remotely to communicate with the client device. The federal device may continue to train the dataset and the training updates may be transmitted to the global AI/ML model located at the edge device or server device. Further, each client device may receive an updated weighted vector. After the media data is trained at the federal device location, the federal device may perform testing on the dataset with respect to specific tasks or applications (for instance the data set may relate to object detection, face recognition, pose estimation, and the like). To perform the specific tasks or applications, the Al/ML model output may be transferred again from the client device to perform test accuracy to satisfy requirements of the specific tasks or applications (e.g., face detection, object detection, pose estimation, and the like) for a distributed framework. The O-SFL process may reduce training time for complex Al/ML models. Accordingly, the transfer of data from the local or client device to the edge device for training may be avoided. Also, the burden on the edge device may be reduced because some of the partial activations may be performed on the client device, and in good network conditions, the trained data may be offloaded from the client device to the edge device for further processing by selecting a suitable codec based on the network conditions. The codec may allow a reduction in the file size of digital media files by removing redundant or irrelevant information, while preserving the quality of the data. The compression may be performed by using compression techniques such as lossy and lossless compression.

In a partial offload scenario, the O-SFL process may find the optimal split of the DNN model based on the network bandwidth. The media data may not be transferred, but the partial output of the model may be shared among the client device and the edge device. In a full offload scenario, the media data may be transferred from the client device to the edge device. The media data may be interchangeably used as trained data or data (e.g., inference data). The codec that is currently used for encoding frames may not be suitable for the transmission to the edge device due to the current network bandwidth fluctuations. Accordingly, an RLCS process may be used to detect the suitable codec in advance, based on current network bandwidth conditions. The performance of the O-SFL process may be compared to provide significant improvements over the SFL process for total training time tested with Wi-Fi and LTE network. In embodiments, there may be more than one split point. The federal device may be included in the client device, or may be placed at a remote location communicatively coupled with the client device.

For each client device to server device communication, embodiments may find the split point of the Al/ML model. The Al/ML model may be partitioned based on the network bandwidth. In embodiments, the network may be any network over which data may be transmitted, for example a Wi-Fi network or a cellular network. Embodiments may average the bandwidth to determine the global split point among client devices and edge devices. Further, the federal device may partition the AI/ML model to upload a partial model to the edge device from the client device, when the network bandwidth is average (e.g., good). The partial model may be a part of data partitioned or divided to train the media data at the client device and the edge device. For example, according to embodiments, based on the network bandwidth being determined to be relatively high (e.g., excellent), the federal device may provide an option to upload the media data to the edge device as a full offload of AI/ML output. Further, because embodiments may relate to sharing partial output and not media in the SFL process, latency and training time may be reduced or minimized. In some embodiments, the partial output may be referred to as partial inference. Further, embodiments may be used to deliver an RLCS process in an edge framework. For example, instead of using one codec for the entire transfer, embodiments may choose a suitable switching mechanism codec based on network variations while the network bandwidth is relatively high (e.g., excellent) to transfer media data to the server device and also to perform Al/ML full offload.

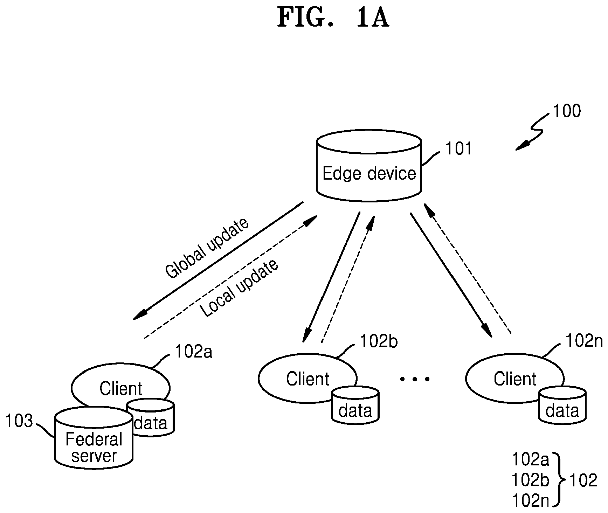

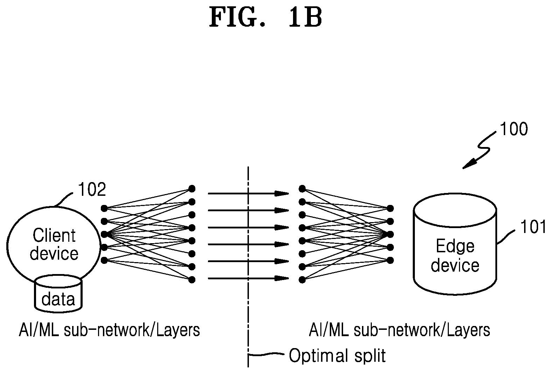

FIG. 1A is a block diagram illustrating a system (100) for performing an O-SFL process, according to embodiments. FIG. 1B is a block diagram illustrating an example of Al/ML model transfer, according to embodiments. An example of the RLCS process for selecting the suitable codec based on network bandwidth conditions is described below with reference to FIGS. 1A-1B. The system (100) may include an edge device (101), a federal device (103), and client devices (102), including for example client device (102a), client device (102b), and client device (102n). In some embodiments, the system (100) may include more than one edge device (101), more or less than the number of client devices (102) shown in FIG. 1A, and more than one federal device (103).

The O-SFL process determines the optimal split in the FL process for client-server architecture based on parameters such as network bandwidth (or may be parameters such as RSSI, energy, and the like). The total latency (such as, the AI/ML model training determination time on both client and server and Al/ML transfer time among client-server) in the O-SFL process may be less than the total latency of an SFL process.

In an embodiment, the training dataset is a subset of a larger dataset used to instruct the Al/ML model to make predictions or classifications. The training dataset is a set of examples used to teach the AI/ML model to determine accurate predictions by adjusting parameters based on an input data and a desired output.

In an embodiment, the client device (102) may be, but is not limited to, a laptop, a desktop computer, a notebook, a relay device, a Device-to-Device (D2D) device, a vehicle to everything (V2X) device, a smartphone, a tablet, an immersive device, and an internet of things (IoT) device.

In an embodiment, the edge device (101) may be, but is not limited to, server device, cloud devices, smartphone, laptop, and the like.

In an embodiment, the O-SFL process with partial offload, the split model may be partially trained on client devices (102), and the partial output may be transferred to the edge device (101) for computation and updating of model weights. The split model may create a partition of the DNN model among the client devices (102) and edge device (101) based on the network bandwidth as shown in FIG. 1B. The partial output may be received from the client devices (102). The partial output may be generated based on the trained data. The client device (102) may train the partitioned DNN model to generate the partial output for the split model.

In embodiments, each of the client devices (102), which may be denoted as k, may compute local weights ( which may be denoted as W at time instance t). The local weights may be for instance *W*_{*t*1} *, W*_{*t*2}, *W*_{*t*3} and *W*_{*t*4} at time t. The local weights may be transmitted to the edge device (101) to compute a global weight update W_(t+1) for split or partition point p. The global weight update *W*_{*t*+1} may be an aggregation of weights to determine the global weight at iteration *t.* In embodiments, *W*_{*t*+1} may denote the global weight calculated using weights received from the client device (102) at time t. Further, the global updated weighted vector *W*_{*t*+1} may be transmitted to each of the client devices (102). For each client-to-server (e.g., client-to-edge) communication, the split point may be determined. The AI/ML model may be partitioned based on the network bandwidth (e.g., the bandwidth of the Wi-Fi network, the cellular network, and the like). The bandwidth may be averaged and the split point P may be calculated to obtain a global split point among the client device (102) and the edge device (101).

In embodiments, there may be more than one client device (102). The client device (102) may be, but is not limited to, User Equipment (UE). The UE may be, for example, a laptop, a desktop computer, a notebook, a relay device, a D2D device, a V2X device, a smartphone, a tablet, an immersive device, and an IoT device, but embodiments are not limited thereto. The wireless cellular network or Wi-Fi may be, for example, a 5G network, a 6G network, and an O-RAN network, but embodiments are not limited thereto.

The total training time taken for training the AI/ML model is lesser than the total training time computed using an SFL process. The total time taken for training the Al/ML model and the Al/ML model transfer time taken between the client device (102) and the edge device (101) may be computed on both the client device (102) and the edge device (101). In the O-SFL process, media data may not be transferred from the client device (102) to the edge device (101). Therefore, during Al/ML partial output, a codec selection process (e.g., the RLCS process) may not be used. The O-SFL process may be suitable in a scenario when the network bandwidth is average (e.g., good). When the network bandwidth is relatively low (e.g., poor), the AI/ML model training may be performed on the federal device (103). The computation of the AI/ML may increase the training overhead on the client device (102). In an embodiment, a client device (102) having an excellent network bandwidth may perform full offloading of media data from the client device (102) to the edge device (101) for training or testing of the Al/ML model. The media data may be encoded or decoded at the client device (102) and the edge device (101).

An example process for performing O-SFL is described below. A set of client devices (102) may be denoted as *k*₁, *k*₂, *k*₃, *kₙ*, and may be deployed in an indoor environment such that the client devices (102) are within a communication range of edge device (101). As an initial step of the method, a local split point *pₖ* may be determined among each client device (102) (denoted as k) and the edge device (101) (denoted as e) based on the network throughput *Thₖ* using an Extended Dynamic Split Computing (E-DSC) process according to Equation 1 below. [Equation 1] ${I}_{n} {f}_{Total} = {argmin}_{pIN 1 , 2 , m} {I}_{n} {f}_{k} + \frac{{output}_{size}}{{Th}_{k}} + {I}_{n} {f}_{e}$

The local split points may be averaged to determine the global average split point in order to split the output layers among client devices (102) and the edge device (101) for splits. Once the global split point is determined, the global split is shared with client devices (102) for the uniform splitting of layers and load respective split models on the client devices (102) and the edge device (101) for training. Further, the dataset may be equally split among each client device (102) for training the dataset. Each client device (102) may perform forward propagation (CFt) using the available dataset and the split model and updates local weights as *hₜₖ*. The partial output of the split model may be transferred using a suitable network (for example a 5G network) to the edge device (101). The edge device (101) performs forward propagation (EFt) for the activation method *A_{t,ik}* of CFt (*A_{t,ik} , h_{t,ik}*) and then backward propagation using the split model loaded using the E-DSC method. The edge device (101) may update the weights of the model once the propagation is done. The client device (102) may receive the output from the edge device (101) and perform backward propagation and update the weights of the parameters of the Al/ML model. The weights may be shared with all the client devices (102) and the edge devices (101) to update the global weights of the global training model. The operations may be repeated for multiple epochs until the training is complete. In the O-SFL process according to embodiments, the dataset may not be shared with a remote edge device (101), and instead only partially activated model output may be shared.

In an embodiment, in an RLCS process with full offload, the media data may be transferred from the client device (102) to the edge device (101). The data encoding in some approaches may not consider network fluctuations. For varying network conditions, instead of using a fixed codec that may fail to fully utilize bandwidth, embodiments may provide a reinforcement learning process that may switch codecs intelligently to an optimal codec to avoid over or under utilization of the network bandwidth. The reinforcement learning model may determine the optimal codec for changing network conditions in advance. The optimal codecs may be the codecs that may be offloaded with less throughput if the network bandwidth is relatively low. The optimal codecs may be selected for offloading the data from the client device (102) to the edge device (101), when the determined global split point results in complete on-edge activation. The optimal codec may be selected based on network conditions using the RLCS process. The data may be offloaded from the client device (102) to the edge device (101) using the optimal codec. In embodiments, the optimal codec may be any suitable codec.

In an embodiment, based on the global split point, the data offloading may be determined. The global split point may be calculated based on the network bandwidth. The DNN model may be fully offloaded or partially offloaded based on the network bandwidth at one or more of the client devices (102). The suitable codec (e.g., the optimal codec) may be determined to fully offload the data.

In an RLCS process, a state *S* for a given throughput at time *t*, may be expressed as *Sₜ* where *Sₜ* = {low, average, good}. In an example, the network bandwidth may be classified as low or below a first threshold (e.g., less than 3 Mbps), average or between two thresholds (e.g., 3 to 9 Mbps), and greater than or equal to a second threshold (e.g., greater than 9 Mbps), but embodiments are not limited thereto. The actions *Aₜ* = {VP8, VP9, H264, H265} may represent different codecs used during encoding/decoding. The codecs may be benchmarked to compute the frame-wise encoding time of the media data, which may be denoted as *Eₙ*, that may be mapped to the throughput *Th* for the network bandwidth *Th = φf*(*E*_*n*) where *φ* denotes an encoding factor during media transmission between the client device (102) and the edge device (101) for a function *f*(*E*_*n*). A Q-learning table in reinforcement learning reward or penalty may be expressed according to Equation 2. ${G}_{t} \left(S, A\right) = {G}_{t - 1} \left(S, A\right) + κ \left({Y}_{t}\left(S, A\right)+ζmax{G}_{t}\left(S*,A*\right)-{G}_{t - 1}\left(S, A\right)\right)$ Equation 2

In Equation 2 above, the learning rate may be denoted *κ*, and *ζ* denotes the discount factor. In the term *max Gt*(*S^{*},A^{*}*), new actions may be maximized (*A**) to choose the best media codec at time *t* based on network speed or conditions. A media codec may be considered best when the output or the processing rate is around the current throughput of the network among the client device (102) and the edge device (101). The RLCS may choose a faster codec that may match with transmission speed, and in bad network conditions, slower and more suitable codecs may be used that may consume less power and may encode and/or decode data such as video data based on bandwidth availability. The reward (or penalty) *Yₜ* may be decided by the ratio between output rate and throughput. If the ratio between output rate and throughput is between 0.5 and 1.5, then *Yₜ* may be +1. Otherwise, if the ratio between output rate and throughput is lower than 0.5 or higher than 1.5, then *Yₜ* may be -1. The output rate may be the rate for processing the media data for each codec. The benchmarking range value for example may be set at 0.5 and 1.5 for the output rate and the throughput for the computation of reward (or penalty). The agent (e.g., the client device (102)) may be rewarded positively when the output rate of the codec is close to the throughput of a current network so that the network is utilized properly. In some embodiments, the agent may be penalized.

To validate the O-SFL process the client devices (102) communicate with the edge device (101). As an example, communication may be performed using Wi-Fi and 4G (e.g., LTE) connectivity using the DNN model having 31 layers for training. To train the DNN model, the learning rate may be for example 0.001 with a batch size of 32. In an embodiment, the dataset may be used to train and test the DNN model. For example, the dataset may include a total of 60000 images (i.e., with 50000 training images and 10000 test images). In one example dataset, 32 X 32 color images may be used for 10 classes and 6000 images per class.

For the client device (102), depending on the network throughput, the global average split point may be computed using the O-SFL process for Wi-Fi and LTE networks. Depending on the throughput values, the split points may be measured for the client devices (102). In a very low throughput, training may be performed on the client-side, and with higher throughput, most or all of the training may be performed on the edge device (101). Training may be performed using 100 iterations (i.e., rounds) for example for four client devices (102), and the global average split point may be determined as 11. For the AI/ML model, layers 1 through 11 may be computed at each client device (102) and layers 12-31 may be computed at the edge device (101). A uniform global partition may be calculated to make the solution simple based on bandwidth.

Table 1 shows example results using Wi-Fi connectivity with an average throughput value of 7.3 Mbps. In the example shown in Table 1, for the O-SFL process, with the split point at 11, the total training time may be 9740.52 seconds. In contrast, for the SFL approach, with the split point at 5, the total training time may be 10468.95 seconds, with the split point at 9, the total training time may be computed as 10202.84 seconds, with the split point at 15, the total training time may be 9799.91 seconds, and with split point at 21, the total training time may be 9941.1 seconds. Table 1 shows that the O-SFL process with the optimal split point 11 may provide a 7.47 % improvement over the SFL process with randomly chosen split point at 5, a 4.74 % improvement over the SFL process with randomly chosen split point at 9, a 0.60 % improvement over the SFL process with randomly chosen split point at 15, and a 2.06 % improvement over the SFL process with randomly chosen split point at 21, for the total training time. Table 1 shows an example comparison of the O-SFL process according to embodiments, and the SFL process for different parameters of the model for Wi-Fi networks. Table 2 shows a similar example comparison of the O-SFL process according to embodiments, and the SFL process for different parameters of the model for 4G (i.e. LTE) networks. Table 3 shows examples of benchmarking results for various video codecs.

**[Table 1]**

| Method | Split Point (Al/ML Layer) | No of. Rounds | Avg. Throughput (Mbps) | Federated Al/ML Model Accuracy | Training Time (Sec) | Transport Time (Sec) | Total Training Time (Sec) |
|---|---|---|---|---|---|---|---|
| O-SFL | 11 | 100 | 7.3 | 85.77% | 9654.52 | 86.00 | 9740.52 |
| SFL | 5 | 100 | 7.3 | 75.89% | 9780.95 | 688.00 | 10468.95 |
| SFL | 9 | 100 | 7.3 | 86.62% | 9858.84 | 344 | 10202.84 |
| SFL | 15 | 100 | 7.3 | 83.53% | 9627.91 | 172 | 9799.91 |
| SFL | 21 | 100 | 7.3 | 85.53% | 9769.18 | 172.00 | 9941.8 |

**[Table 2]**

| Method | Split Point (Al/ML Layer) | No. of Rounds | Avg. Throughput (Mbps) | Federated Al/ML Model Accuracy | Training Time (Sec) | Transport Time (Sec) | Total Training Time (Sec) |
|---|---|---|---|---|---|---|---|
| O-SFL | 11 | 100 | 6.1 | 86.21 % | 9610.47 | 102 | 9712.47 |
| SFL | 5 | 100 | 6.1 | 86.59 % | 9788.36 | 823 | 10611.36 |
| SFL | 9 | 100 | 6.1 | 86.61 % | 9739.64 | 411 | 10150.64 |
| SFL | 15 | 100 | 6.1 | 84.79 % | 9628.29 | 205 | 9833.29 |
| SFL | 21 | 100 | 6.1 | 84.89 % | 9830.19 | 205 | 10035.19 |

**[Table 3]**

| Codec | Compression Speed | Frames per Second (FPS) | Output Size (KB) | Frame wise Encoding Time (ms) | Output Rate (Kbps) |
|---|---|---|---|---|---|
| VP8 | 1.78 | 46 | 478 | 18.6 | 28.4 |
| VP9 | 0.97 | 23 | 296 | 33.8 | 9.5 |
| H264 | 12.78 | 241 | 381 | 2.87 | 146 |
| H265 | 2.21 | 56 | 201 | 14.9 | 14.8 |

The example shown in Table 2 may correspond to the LTE network with an average throughput value of 6.1 Mbps for communication among the client devices (102) and edge device (101). The results show that for O-SFL approach with the global optimal split point of 11, the total training time recorded may be 9712.47 seconds. In contrast, for the SFL approach with the split point at 5, the total training time may be 10611.36 seconds, with the split point at 9, the total training time may be 10150.64 seconds, with the split point at 15, the total training time may be 9833.23 seconds, and with the split point at 21, the total training time may be 10035.19 seconds. Table 2 shows that the O-SFL process with the optimal split point at 11 may provide a 9.25% improvement over the SFL process with randomly chosen split point at 5), a 4.51% improvement over the SFL process with randomly chosen split point at 9, a 1.24% improvement over the SFL process with randomly chosen split point at 15, and a 3.32% improvement over the SFL process with randomly chosen split point at 21 for total training time. The O-SFL process may perform better than the SFL process in a different network that is described using different split points and the performance based on total training time. The Al/ML model training may generally be a time-consuming process, and even a small improvement in overall training time may be beneficial.

Table 3 shows the benchmarking values for various codecs. Examples of the performance of each codec (VP8, VP9, H264, and H265) may be compared based on KPIs, and the codec may be used to devise a reinforcement model based on compression rate and other factors. For compression or encoding, a file of size 810 KB with 640 X 360 resolution may be used. The compression speed may denote the rate of encoding frames. The FPS may denote the number of frames processed per second. Output size may denote the size of the file after compression. The frame-wise encoding time may denote the time taken to encode each frame, and the output rate may denote the encoding rate that is the time taken to encode each frame.

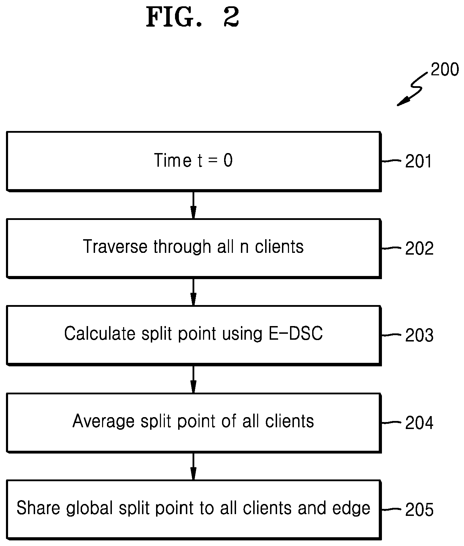

FIG. 2 is a flow diagram illustrating an O-SFL process (200) at time t=0, according to embodiments.

At operation 201, the federal device (103) may act as the main server. In the initial iteration of operation 201, a global optimal split point may be measured for time *t*. For example, the time for the initial iteration of operation 201 may be 0 (time *t* = 0)

At operation 202, the process 200 may include traversing through each of the client devices (102). There may be more than one client device (102).

At operation 203, the process 200 may include finding the optimal local split point for each client device (102) using an E-DSC process based on the throughput of the current network. The split point may be used to split the DNN model among client devices (102) and edge device (101).

At operation 204, the federal device (103), acting as the main server, may collect the individual optimal local split points from each client device (102) and find an average split point using the collected data.

At operation 205, repeating operation 201-204 for the time period *T* and determine the global average split point by taking an average of all the average split points received over the time period *T* in the federal device (103). After the global optimal split point is determined, the global optimal split point may be shared with all the client devices (102) and edge device (101). Based on global split point, the DNN model may be split among the client devices (102) and the edge device (101) for training.

The optimal global split may be dependent on throughput, because the E-DSC process throughput may be a parameter for calculating the optimal local split point to reduce overall latency. The E-DSC process may involve transferring the partial output of the split model from client device to edge device. When the throughput is relatively high (e.g., good or excellent), the transfer time of partial data may be lower. When throughput is bad (e.g., poor), total output time may increase. In the O-SFL process, when the E-DSC process is used as the base method, bandwidth or throughput may contribute to optimally choosing the global split point.

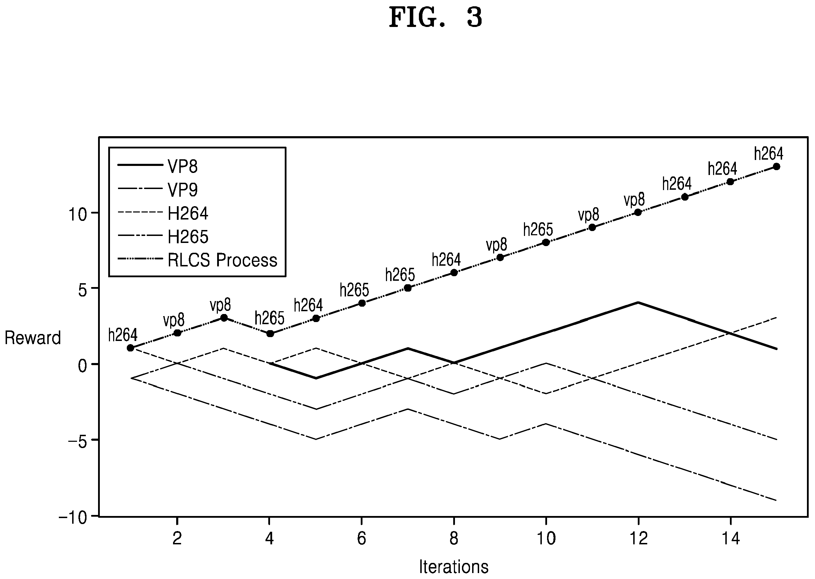

FIG. 3 is a graph illustrating an example of the RLCS process for LTE connectivity, according to the embodiments as disclosed herein. Referring to FIG. 3 illustrates at each iteration for different values of throughput using Wi-Fi connectivity between the client device (102) and the edge device (101) over iterations, the performance of each codec (i.e., for VP8, VP9, H264, and H265) versus codec chosen using the RLCS process. For each iteration, when the codec performs well, the codec is rewarded by +1 and when the codec performs poorly the codec is penalized by -1. The codec performance is good when the output rate of compressed data from the codec is close to the throughput of the current network for proper utilization of the network. When the output rate is far from the current network throughput, then the output rate is a bad codec at given network conditions.

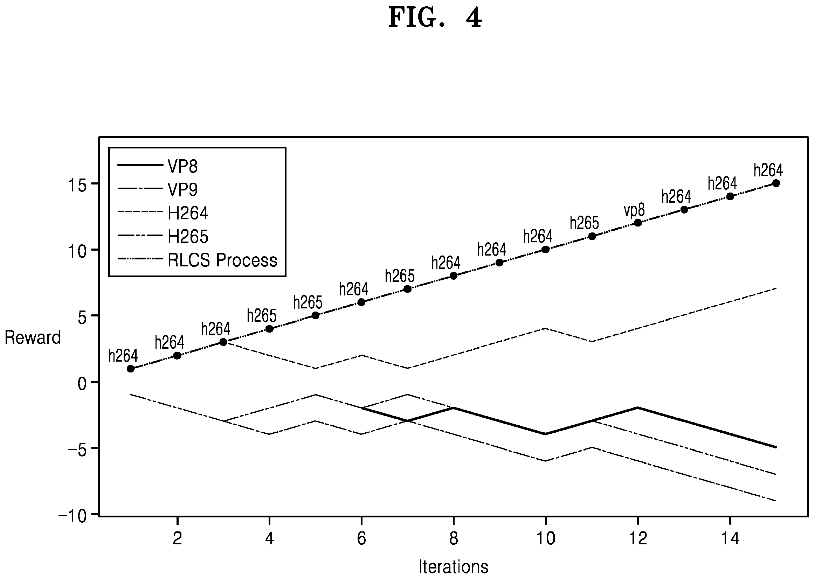

FIG. 4 is a graph illustrating an example of the RLCS process for Wi-Fi connectivity, according to the embodiments as disclosed herein. FIG. 4 shows results between client devices (102) and edge devices (101) which are similar to the LTE results shown in FIG. 3. FIG. 4 depicts the prediction of better-performing codecs under varying network conditions in which codecs are chosen intelligently using the RLCS process according to embodiments in order to fully utilize bandwidth. In FIG. 4, each codec curve may represent the performance based on reward, the RLCS process curve represents the codec chosen based on the RLCS process and the reward/penalty is shown for each iteration. Generally, various codecs (e.g., VP8, VP9, H264, H265) may be used for media encoding or decoding are used as fixed codecs at client or server, and may be suitable for varying network conditions. To mitigate this issue, the embodiments may use the RLCS process based on network conditions.

The RLCS process may provide the most accurate timing to perform the codec switching, to avoid the delay while performing the best codec selection. Further, the RLCS process may provide a-priori detection of a codec suitable (e.g., the optimal codec) based on the network conditions. Depending on network speed/network conditions, embodiments may choose faster codecs to match with transmission speed and, in bad network conditions, the method may use slower, more suitable codecs to consume less power and encode/decode video data based on bandwidth availability.

In some embodiments, for example in an Augmented Reality (AR)/Virtual Reality (VR) device such as AR/VR glasses, the DNN layers may be partitioned, to compute percentage of DNN layers on the AR/VR device, and the rest of the DNN layers may be offloaded to nearby devices (such as the edge device (101)) based on certain parameters such as network bandwidth, and the like. The percentage may vary from 0-100% depending on use cases, capability of devices, network throughput and the like. According to embodiments, training may be performed using a training dataset for object detection. After the rest of the DNN output is computed at the edge device (101), the DNN output may be further provided as feedback to the AR/VR device to provide face recognition or object detection output results.

Embodiments may be used to provide police surveillance. For example, police may capture a video from an Al-based AR device to observe the behavior of intruders and transfer the streaming video to any central cloud server or edge node. There may be a need to detect the intruder based on the decision, which may impose a strict latency requirement. Due to the strict latency requirement, a full offload condition of AI/ML inference may be performed, where the media transfer may be done from the AR device (e.g., the client device (102)) to a server (e.g., the edge device (101)).

In an example of a mission critical application, a drone may act as a client device (102) to capture video in order to search for any survivors of a disaster or other emergency, and to take pictures from different angles and perform video streaming to transfer the video to another location in fully offload inference to detect a location of the survivor, a physical condition of the survivor, and the like. In video or audio applications, latency may play an important role in the applications under various codec switching processes due to network fluctuations.

The client device (102) may include different devices such as loT devices, smart-phone, tablets, and the like (e.g., heterogeneous devices). The data may be distributed among clients as IID data or non-IID data. The optimal global split point may be determined in a home environment. The environment may change in another environment such as an outdoor scenario based on the bandwidth condition for each client device (102), a data distribution, and different heterogeneous devices. The client devices (102) may have equal capabilities where data are uniformly distributed among them (e.g., non-IID data).

Further, embodiments may include an RLCS process that combines Q-Learning with the DNN to choose the best codec among several codecs based on network conditions to provide low latency for multimedia transmission. In embodiments the RLCS mechanism may proceed according to the description below.

First, for a Deep Q-learning reinforcement learning (DQN) model, states may be defined and categorized into groups based on the throughput value of the network.

For example, a state *Sₜ* for a given throughput at time *t* may be expressed as one of states *Sₜ* = {low, average, good}.

Next, actions may be defined for the different codecs used for encoding and decoding.

For example, an action *Aₜ* at time *t* may be expressed as one of actions *Aₜ =* {VP8, VP9, H264, H265}.

Based on network conditions, the RLCS process may choose an action and reward it based on performance, and continue learning using the DQN model.

Next, before performing the DQN model, the RLCS process may benchmark the various codecs (e.g., VP8, VP9, H264, and H265) to compute frame wise encoding time (e.g., in milliseconds (ms)) of the image denoted as *E*.

For example, *E* may be mapped to the throughput denoted as *Tₚᵤₜ* of the network bandwidth as chosen for any client to communicate with edge device (101) for media transfer full offload expressed as *Tₚᵤₜ*=x F(E) where *x* denotes the encoding factor during media transmission for function *F*.

Next, a Q-learning table may be computed for throughputs and various codecs.

Next, Equation 2 may be computed, where *Gₜ*(*s, a*) denotes the updated Q-learning function at time *t* to select action *Aₜ* = {VP8, VP9, H264, H265}.

6. In the term max *G_t* (*s***,a**), the RLCS process may maximize the new action (*a**) to select the best codec based on the new state, *s**. The term *ζ* may denote the discount factor for a long-term reward to select a suitable codec rate.

7Finally, the reward and penalty may be provided based on the action taken.

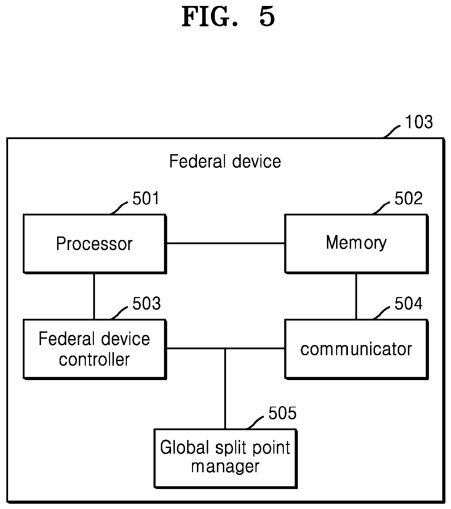

FIG. 5 is a block diagram showing an example of the federal device (103) for determining split-point based on network bandwidth for the O-SFL process, according to embodiments.

The federal device (103) may include a processor (501), a memory (502), a federal device controller (503), a communicator (504), and a global split point manager (505).

In an embodiment, the memory (502) may store Physical Downlink Control Channel (PDCCH) information, Downlink Control Information (DCI) information, and Physical Downlink Shared Channel (PDSCH) information. The memory (502) may store instructions to be activated by the processor (501). The memory (502) may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (502) may, in some examples, include a non-transitory storage medium. The term "non-transitory" may indicate that the storage medium is not embodied in a carrier wave or a propagated signal. However, the term "non-transitory" should not be interpreted that the memory (502) is non-movable. In some examples, the memory (502) may be configured to store larger amounts of information than the memory. In certain examples, a non-transitory storage medium may store data that may, over time, change (e.g., in Random Access Memory (RAM) or cache). The memory (502) may be an internal storage unit or may be an external storage unit of the edge device (101), cloud storage, or any other type of external storage. The memory (502) may store the data such as the local split point data associated with the DNN model.

The processor (501) may communicate with the memory (502), the federal device controller (503), the communicator (504), and the global split point manager (505). The processor (501) may be configured to activate the memory (502) to perform various processes. The processor (501) may include one or a plurality of processors, maybe a general-purpose processor, such as a central processing unit (CPU), an application processor (AP), or the like, a graphics-only processing unit such as a graphics processing unit (GPU), a visual processing unit (VPU), and/or an Artificial intelligence (AI) dedicated processor such as a neural processing unit (NPU). The processor (501) may perform the operations such as applying the determined global split point for partitioning the DNN model between the client device and the edge device to train the DNN model. The processor (501) may uniformly split the layers of the DNN model between the client device and the edge device, based on the global split point for partitioning the DNN model, and load the split DNN model on the client device and the edge device.

The communicator (504) may be configured to communicate internally between internal hardware components and with external devices (such as client devices) via one or more networks. The communicator (504) may include an electronic circuit specific to a standard that enables wired or wireless communication.

The global split point manager (505) may be implemented using processing circuitry such as logic gates, integrated circuits, microprocessors, microcontrollers, memory circuits, passive electronic components, active electronic components, optical components, hardwired circuits, or the like, and may optionally be driven by firmware. The circuits may, for example, be embodied or included in one or more semiconductor chips, or on substrate supports such as printed circuit boards and the like. The average of the local split points associated with the DNN model from the client device is determined over time and the global split point for partitioning the DNN model between the client device and the edge device may be determined based on the average of the local split points. The determined global split point may be applied for partitioning the DNN model between the client device and the edge device to train the DNN model.

In an embodiment, applying the determined global split point for partitioning the DNN model between the client device and the edge device to train the DNN model may include sending the global split point for partitioning the DNN model to the client device (102) and uniformly splitting the layers of the DNN model between the client device (102) and the edge device (101), based on the global split point for partitioning the DNN model to load split DNN model on the client device (102) and the edge device (101). The local split point associated with the DNN model of the client device (102) may be determined based on network bandwidth for communication between the client device (102) and the edge device (101).

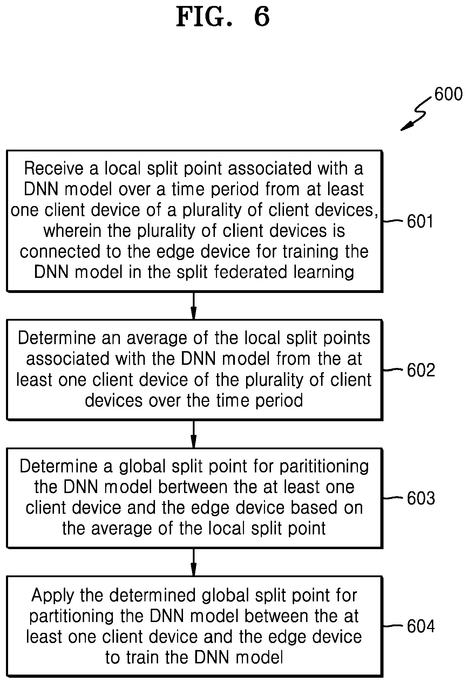

FIG. 6 is a flow chart illustrating an example O-SFL process in a wireless network, according to embodiments.

At operation 601, a local split point associated with a DNN model may be received over a time period from a plurality of client devices (102), and the plurality of client devices (102) may be connected to the edge device (101) for training the DNN model in the split federated learning.

At operation 602, an average of the local split points associated with the DNN model may be determined from the client device (102) over the time period.

At operation 603, the global split point may be determined for partitioning the DNN model between the client device (102) and the edge device (101) based on the average of the local split points.

At operation 604, the determined global split point may be applied for partitioning the DNN model between the client device (102) and the edge device (101) to train the DNN model.

In some approaches, during the AI/ML model partition in the SFL process, the SFL process may randomly partition the Al/ML model among client and server, and the client may train few layers of an Al/ML sub-network while most layers reside in the server.

Unlike such approaches, embodiments may determine the O-SFL process for client-server architecture based on certain parameters such as bandwidth (or any other parameter such as RSSI, energy, etc.). Further, the embodiments may reduce total latency (e.g., AI/ML model training computation time on both client and server with Al/ML transfer time among client-server) to be less than the total latency of approaches using the SFL process.

In some approaches, when the network bandwidth is good, there is an option of offloading media data from client to server for training or testing. Generally, various codecs (e.g., H264, VP-8, VP-9 and the like) that may be used for media encoding or decoding are used as the fixed codec at the client device (102) or the edge device (101).

Unlike these approaches, to mitigate this issue, embodiments may use an RLCS process based on network conditions. The RLCS process may provide the most accurate timing to perform the codec switching, to avoid delays while performing the best codec selection. Further, embodiments may detect a suitable codec in advance based on the network condition. Depending on network speed/network conditions, embodiments may choose faster codecs that may match with transmission speed, and in bad network conditions, the user may use slower, more suitable codecs that consume less power and encode/decode video data based on bandwidth availability.

The foregoing description of the specific embodiments will so fully reveal the general nature of the embodiments herein that one of ordinary skill in the art may readily modify and/or adapt for various applications such specific embodiments without departing from the general concept thereof, and, therefore, such adaptations and modifications should and are intended to be comprehended to be within the meaning and range of equivalents of the disclosed embodiments within the scope of the of the present invention as defined by the appended set of claims. It is to be understood that the phraseology or terminology employed herein is for description and not of limitation. Therefore, while the embodiments herein have been described in terms of preferred embodiments, those skilled in the art will recognize that the embodiments herein may be practiced with modification within the scope of the of the present invention as defined by the appended set of claims.

## Claims

1. A method for optimal split federated learning, O-SFL, in a wireless network, the method comprising:
receiving, by a federal device (103) in the wireless network, local split points associated with a deep neural network, DNN, model over a time period from client devices (102a-102n) connected to an edge device (101) for training the DNN model using split federated learning, SFL, and wherein the local split points are determined based on a network bandwidth for communication between each of the client devices (102) and the edge device (101);
determining, by the federal device (103), an average of the local split points;
determining, by the federal device (103), a global split point for partitioning the DNN model between the client devices (102) and the edge device (101) based on the average of the local split points; and
applying, by the federal device (103), the determined global split point to train the DNN model.

2. The method as claimed in claim 1, wherein the applying of the determined global split point comprises:
sending, by the federal device (103), the global split point for partitioning the DNN model to the client devices (102);
uniformly splitting, by the federal device (103), a plurality of layers of the DNN model between the client devices (102) and the edge device (101), based on the global split point for partitioning the DNN model; and
loading, by the federal device (103), a corresponding split DNN model on the client devices (102) and the edge device (101).

3. The method as claimed in claim 1, further comprising:
receiving, by the federal device (103), a training dataset split between the client devices (102); and
applying, by the federal device (103), the corresponding split DNN model using a split training dataset.

4. The method as claimed in claim 3, wherein a forward propagation is performed by the client devices (102) using the training dataset and the corresponding split DNN model,
wherein a partial output of the corresponding split DNN model is determined by the client devices (102) based on the forward propagation, and
wherein the partial output is sent by the client devices (102) to the edge device (101).

5. The method as claimed in claim 4, further comprising:
performing, by the federal device (103), a forward propagation for applying the global split point and a backward propagation using the corresponding split DNN model at the edge device (101) during the training of the DNN model; and
updating, by the federal device (103), a plurality of global model parameters associated with the DNN model during the training of the DNN model.

6. The method as claimed in claim 1, further comprising:
selecting, by the client devices (102), an optimal codec for offloading the data from the client devices (102) to the edge device (101), based on the determined global split point resulting in full offload, wherein the optimal codec is selected based on network bandwidth using a reinforcement learning based codec switching, RLCS, mechanism; and
offloading, by the client devices (102), the data from the client devices (102) to the edge device (101) using the selected optimal codec.

7. The method as claimed in claim 6, further comprising:
determining, by the federal device (103), whether an output rate of at least one codec is within a throughput threshold, wherein the throughput threshold is determined based on the network bandwidth of the devices (102);
based on determining that the output rate of the at least one codec is within the throughput threshold, assigning a reward to the client devices (102); and
based on determining that the output rate of the at least one codec is not within the throughput threshold, assigning a penalty to the client devices (102).

8. A federal device (103) for performing optimal split federated learning, O-SFL, in a wireless network, the federal device (103) comprising:
a memory (502);
a processor (501) coupled to the memory (502);
a communicator (504) coupled to the memory (502) and the processor (501);
a federal device controller (503) coupled to the memory (502), the processor (501) and the communicator (504); and
a global split point manager (505) coupled to the memory (502), the processor (501), the communicator (504), and the federal device controller (503),
wherein the federal device (103) is configured to:
receive local split points associated with a deep neural network (DNN) model over a time period from client devices (102a-102n) connected to the federal device (103) for training the DNN model using split federated learning, SFL;
determine an average of the local split points;
determine a global split point for partitioning the DNN model between the client devices (102) and an
edge device (101) based on the average of the local split points; and
apply the determined global split point to train the DNN model,
wherein the federal device (103) is further configured to determine the local split points based on a network bandwidth for communication between each of the client devices (102) and the edge device (101).

9. A system (100) for performing optimal split federated learning, O-SFL, in a wireless network, the system (100) comprising:
an edge device (101);
client devices (102a-102n); and
the federal device (103) according to claim 8.

10. The system (100) as claimed in claim 9, wherein to determine the global split point, the federal device (103) is further configured to:
send the global split point for partitioning the DNN model to the client devices (102);
uniformly split a plurality of layers of the DNN model between the client devices (102) and the edge device (101), based on the global split point; and
load a corresponding split DNN model on the client devices (102) and the edge device (101).

11. The system (100) as claimed in claim 10, wherein the federal device (103) is further configured to:
split a training dataset between the client devices (102); and
apply the corresponding split DNN model using a split training dataset.

12. The system (100) as claimed in claim 11, wherein each of the client devices (102) is configured to:
perform a forward propagation using the training dataset and the corresponding split DNN model;
determine a partial output of the corresponding split DNN model based on the forward propagation; and
send the partial output to the edge device (101).

13. The system (100) as claimed in claim 12, wherein the edge device (101) is configured to:
perform a forward propagation for applying the global split point associated with the DNN model and a backward propagation using the corresponding split DNN model at the edge device (101) during the training of the DNN model; and
update a plurality of global model parameters associated with the DNN model during the training of the DNN model.

14. The system (100) as claimed in claim 9, wherein the federal device (103) is further configured to select an optimal codec for offloading the data from the client devices (102) to the edge device (101), when the determined global split point results in full offload, wherein the optimal codec is selected based on network bandwidth using a reinforcement learning based codec switching, RLCS, mechanism, and
wherein each of the client devices (102) is configured to offload data to the edge device (101) using the selected optimal codec.

## Patentansprüche

1. Verfahren für optimales geteiltes föderiertes Lernen, O-SFL, in einem drahtlosen Netzwerk, wobei das Verfahren Folgendes umfasst:
Empfangen, durch eine föderale Vorrichtung (103) in dem drahtlosen Netzwerk, von lokalen Teilungspunkten, die einem Modell eines tiefen neuronalen Netzes, DNN, zugeordnet sind, über einen Zeitraum von Client-Vorrichtungen (102a-102n), die mit einer Edge-Vorrichtung (101) verbunden sind, zum Trainieren des DNN-Modells unter Verwendung von geteiltem föderiertem Lernen, SFL, und wobei die lokalen Teilungspunkte auf Grundlage einer Netzwerkbandbreite zur Kommunikation zwischen jeder der Client-Vorrichtungen (102) und der Edge-Vorrichtung (101) bestimmt werden;
Bestimmen, durch die föderale Vorrichtung (103), eines Durchschnitts der lokalen Teilungspunkte;
Bestimmen, durch die föderale Vorrichtung (103), eines globalen Teilungspunkts zum Aufteilen des DNN-Modells zwischen den Client-Vorrichtungen (102) und der Edge-Vorrichtung (101) auf Grundlage des Durchschnitts der lokalen Teilungspunkte; und
Anwenden, durch die föderale Vorrichtung (103), des bestimmten globalen Teilungspunkts, um das DNN-Modell zu trainieren.

2. Verfahren nach Anspruch 1, wobei das Anwenden des bestimmten globalen Teilungspunkts Folgendes umfasst:
Senden, durch die föderale Vorrichtung (103), des globalen Teilungspunkts zum Aufteilen des DNN-Modells an die Client-Vorrichtungen (102);
einheitliches Teilen, durch die föderale Vorrichtung (103), einer Vielzahl von Schichten des DNN-Modells zwischen den Client-Vorrichtungen (102) und der Edge-Vorrichtung (101) auf Grundlage des globalen Teilungspunkts zum Aufteilen des DNN-Modells; und
Laden, durch die föderale Vorrichtung (103), eines entsprechenden geteilten DNN-Modells auf die Client-Vorrichtungen (102) und die Edge-Vorrichtung (101).

3. Verfahren nach Anspruch 1, ferner umfassend:
Empfangen, durch die föderale Vorrichtung (103), eines Trainingsdatensatzes, der zwischen den Client-Vorrichtungen (102) geteilt ist; und
Anwenden, durch die föderale Vorrichtung (103), des entsprechenden geteilten DNN-Modells unter Verwendung eines geteilten Trainingsdatensatzes.

4. Verfahren nach Anspruch 3, wobei eine Vorwärtspropagierung durch die Client-Vorrichtungen (102) unter Verwendung des Trainingsdatensatzes und des entsprechenden geteilten DNN-Modells durchgeführt wird,
wobei eine Teilausgabe des entsprechenden geteilten DNN-Modells durch die Client-Vorrichtungen (102) auf Grundlage der Vorwärtspropagierung bestimmt wird und
wobei die Teilausgabe durch die Client-Vorrichtungen (102) an die Edge-Vorrichtung (101) gesendet wird.

5. Verfahren nach Anspruch 4, ferner umfassend:
Durchführen, durch die föderale Vorrichtung (103), einer Vorwärtspropagierung zum Anwenden des globalen Teilungspunkts und einer Rückwärtspropagierung unter Verwendung des entsprechenden geteilten DNN-Modells auf der Edge-Vorrichtung (101) während des Trainings des DNN-Modells; und
Aktualisieren, durch die föderale Vorrichtung (103), einer Vielzahl von globalen Modellparametern, die dem DNN-Modell zugeordnet sind, während des Trainings des DNN-Modells.

6. Verfahren nach Anspruch 1, ferner umfassend:
Auswählen, durch die Client-Vorrichtungen (102), eines optimalen Codecs zum Auslagern der Daten von den Client-Vorrichtungen (102) an die Edge-Vorrichtung (101) auf Grundlage des bestimmten globalen Teilungspunkts, der zu einem vollständigen Auslagern führt, wobei der optimale Codec auf Grundlage einer Netzwerkbandbreite unter Verwendung eines auf bestärkendem Lernen basierenden Codec-Wechselmechanismus, RLCS-Mechanismus, ausgewählt wird; und
Auslagern, durch die Client-Vorrichtungen (102), der Daten von den Client-Vorrichtungen (102) an die Edge-Vorrichtung (101) unter Verwendung des ausgewählten optimalen Codecs.

7. Verfahren nach Anspruch 6, ferner umfassend:
Bestimmen, durch die föderale Vorrichtung (103), ob eine Ausgaberate von mindestens einem Codec innerhalb eines Durchsatzschwellenwerts liegt, wobei der Durchsatzschwellenwert auf Grundlage der Netzwerkbandbreite der Vorrichtungen (102) bestimmt wird;
auf Grundlage dessen, dass bestimmt wird, dass die Ausgaberate des mindestens einen Codecs innerhalb des Durchsatzschwellenwerts liegt, Zuweisen einer Belohnung zu den Client-Vorrichtungen (102); und
auf Grundlage dessen, dass bestimmt wird, dass die Ausgaberate des mindestens einen Codecs nicht innerhalb des Durchsatzschwellenwerts liegt, Zuweisen einer Strafe zu den Client-Vorrichtungen (102).

8. Föderale Vorrichtung (103) zum Durchführen von optimalem geteiltem föderiertem Lernen, O-SFL, in einem drahtlosen Netzwerk, wobei die föderale Vorrichtung (103) Folgendes umfasst:
einen Speicher (502);
einen Prozessor (501), der an den Speicher (502) gekoppelt ist;
einen Kommunikator (504), der an den Speicher (502) und den Prozessor (501) gekoppelt ist;
eine Steuerung (503) einer föderalen Vorrichtung, die an den Speicher (502), den Prozessor (501) und den Kommunikator (504) gekoppelt ist; und
eine Verwaltungseinheit (505) für globale Teilungspunkte, die an den Speicher (502), den Prozessor (501), den Kommunikator (504) und die Steuerung (503) der föderalen Vorrichtung gekoppelt ist,
wobei die föderale Vorrichtung (103) ausgelegt ist zum:
Empfangen von lokalen Teilungspunkten, die einem Modell eines tiefen neuronalen Netzes (DNN) zugeordnet sind, über einen Zeitraum von Client-Vorrichtungen (102a-102n), die mit der föderalen Vorrichtung (103) verbunden sind, zum Trainieren des DNN-Modells unter Verwendung von geteiltem föderiertem Lernen, SFL;
Bestimmen eines Durchschnitts der lokalen Teilungspunkte;
Bestimmen eines globalen Teilungspunkts zum Aufteilen des DNN-Modells zwischen den Client-Vorrichtungen (102) und einer Edge-Vorrichtung (101) auf Grundlage des Durchschnitts der lokalen Teilungspunkte; und
Anwenden des bestimmten globalen Teilungspunkts, um das DNN-Modell zu trainieren,
wobei die föderale Vorrichtung (103) ferner dazu ausgelegt ist, die lokalen Teilungspunkte auf Grundlage einer Netzwerkbandbreite zur Kommunikation zwischen jeder der Client-Vorrichtungen (102) und der Edge-Vorrichtung (101) zu bestimmen.

9. System (100) zum Durchführen von optimalem geteiltem föderiertem Lernen, O-SFL, in einem drahtlosen Netzwerk, wobei das System (100) Folgendes umfasst:
eine Edge-Vorrichtung (101);
Client-Vorrichtungen (102a-102n); und
die föderale Vorrichtung (103) nach Anspruch 8.

10. System (100) nach Anspruch 9, wobei, um den globalen Teilungspunkt zu bestimmen, die föderale Vorrichtung (103) ferner ausgelegt ist zum:
Senden des globalen Teilungspunkts zum Aufteilen des DNN-Modells an die Client-Vorrichtungen (102);
einheitlichen Teilen einer Vielzahl von Schichten des DNN-Modells zwischen den Client-Vorrichtungen (102) und der Edge-Vorrichtung (101) auf Grundlage des globalen Teilungspunkts; und
Laden eines entsprechenden geteilten DNN-Modells auf die Client-Vorrichtungen (102) und die Edge-Vorrichtung (101).

11. System (100) nach Anspruch 10, wobei die föderale Vorrichtung (103) ferner ausgelegt ist zum:
Teilen eines Trainingsdatensatzes zwischen den Client-Vorrichtungen (102); und
Anwenden des entsprechenden geteilten DNN-Modells unter Verwendung eines geteilten Trainingsdatensatzes.

12. System (100) nach Anspruch 11, wobei die Client-Vorrichtungen (102) jeweils ausgelegt sind zum:
Durchführen einer Vorwärtspropagierung unter Verwendung des Trainingsdatensatzes und des entsprechenden geteilten DNN-Modells;
Bestimmen einer Teilausgabe des entsprechenden geteilten DNN-Modells auf Grundlage der Vorwärtspropagierung; und
Senden der Teilausgabe an die Edge-Vorrichtung (101).

13. System (100) nach Anspruch 12, wobei die Edge-Vorrichtung (101) ausgelegt ist zum:
Durchführen einer Vorwärtspropagierung zum Anwenden des globalen Teilungspunkts, der dem DNN-Modell zugeordnet ist, und einer Rückwärtspropagierung unter Verwendung des entsprechenden geteilten DNN-Modells auf der Edge-Vorrichtung (101) während des Trainings des DNN-Modells; und
Aktualisieren einer Vielzahl von globalen Modellparametern, die dem DNN-Modell zugeordnet sind, während des Trainings des DNN-Modells.

14. System (100) nach Anspruch 9, wobei die föderale Vorrichtung (103) ferner dazu ausgelegt ist, einen optimalen Codec zum Auslagern der Daten von den Client-Vorrichtungen (102) an die Edge-Vorrichtung (101) auszuwählen, wenn der bestimmte globale Teilungspunkt zu einem vollständigen Auslagern führt, wobei der optimale Codec auf Grundlage einer Netzwerkbandbreite unter Verwendung eines auf bestärkendem Lernen basierenden Codec-Wechselmechanismus, RLCS-Mechanismus, ausgewählt wird und
wobei die Client-Vorrichtungen (102) jeweils dazu ausgelegt sind, Daten unter Verwendung des ausgewählten optimalen Codecs an die Edge-Vorrichtung (101) auszulagern.

## Revendications

1. Procédé d'apprentissage fédéré divisé optimal, O-SFL, dans un réseau sans fil, le procédé comprenant :
la réception, par un dispositif fédéral (103) dans le réseau sans fil, des points divisés locaux associés à un modèle de réseau neuronal profond, DNN, sur une période de temps à partir de dispositifs clients (102a-102n) connectés à un dispositif périphérique (101) pour l'entraînement du modèle DNN à l'aide d'un apprentissage fédéré divisé, SFL, et dans lequel les points divisés locaux sont déterminés à partir d'une bande passante réseau pour la communication entre chacun des dispositifs clients (102) et le dispositif périphérique (101) ;
la détermination, par le dispositif fédéral (103), d'une moyenne des points divisés locaux ;
la détermination, par le dispositif fédéral (103), d'un point divisé global pour la partition du modèle DNN entre les dispositifs clients (102) et le dispositif périphérique (101) à partir de la moyenne des points divisés locaux ; et
l'application, par le dispositif fédéral (103), du point divisé global déterminé pour l'entraînement du modèle DNN.

2. Procédé selon la revendication 1, dans lequel l'application du point divisé global déterminé comprend :
l'envoi, par le dispositif fédéral (103), du point divisé global pour la partition du modèle DNN aux dispositifs clients (102) ;
la division uniforme, par le dispositif fédéral (103), d'une pluralité de couches du modèle DNN entre les dispositifs clients (102) et le dispositif périphérique (101) à partir du point divisé global pour la partition du modèle DNN ; et
le chargement, par le dispositif fédéral (103), d'un modèle DNN divisé correspondant sur les dispositifs clients (102) et le dispositif périphérique (101).

3. Procédé selon la revendication 1, comprenant en outre :
la réception, par le dispositif fédéral (103), d'un ensemble de données d'entraînement divisé entre les dispositifs clients (102) ; et
l'application, par le dispositif fédéral (103), du modèle DNN divisé correspondant en utilisant un ensemble de données d'entraînement divisé.

4. Procédé selon la revendication 3, dans lequel une propagation vers l'avant est effectuée par les dispositifs clients (102) à l'aide de l'ensemble de données d'entraînement et du modèle DNN divisé correspondant,
dans lequel une sortie partielle du modèle DNN divisé correspondant est déterminée par les dispositifs clients (102) à partir de la propagation vers l'avant, et
dans lequel la sortie partielle est envoyée par les dispositifs clients (102) au dispositif périphérique (101).

5. Procédé selon la revendication 4, comprenant en outre :
l'exécution, par le dispositif fédéral (103), d'une propagation vers l'avant pour l'application du point divisé global et d'une propagation vers l'arrière en utilisant le modèle DNN divisé correspondant au niveau du dispositif périphérique (101) lors de l'entraînement du modèle DNN ; et
la mise à jour, par le dispositif fédéral (103), d'une pluralité de paramètres de modèle global associés au modèle DNN lors de l'entraînement du modèle DNN.

6. Procédé selon la revendication 1, comprenant en outre :
la sélection, par les dispositifs clients (102), d'un codec optimal pour le déchargement des données des dispositifs clients (102) vers le dispositif périphérique (101), à partir du point divisé global déterminé aboutissant à un déchargement complet, le codec optimal étant sélectionné à partir de la bande passante réseau à l'aide d'un mécanisme de commutation de codec basée sur l'apprentissage par renforcement, RLCS ; et
le déchargement, par les dispositifs clients (102), des données des dispositifs clients (102) vers le dispositif périphérique (101) à l'aide du codec optimal sélectionné.

7. Procédé selon la revendication 6, comprenant en outre :
la détermination, par le dispositif fédéral (103), si un débit de sortie d'au moins un codec est dans un seuil de débit, le seuil de débit étant déterminé à partir de la bande passante réseau des dispositifs (102) ;
à partir de la détermination que le débit de sortie de l'au moins un codec est dans le seuil de débit, l'attribution d'une récompense aux dispositifs clients (102) ; et
à partir de la détermination que le débit de sortie de l'au moins un codec n'est pas dans le seuil de débit, l'attribution d'une pénalité aux dispositifs clients (102).

8. Dispositif fédéral (103) pour l'exécution de l'apprentissage fédéré divisé optimal, O-SFL, dans un réseau sans fil, le dispositif fédéral (103) comprenant :
une mémoire (502) ;
un processeur (501) couplé à la mémoire (502) ;
un communicateur (504) couplé à la mémoire (502) et au processeur (501) ;
un dispositif de commande du dispositif fédéral (503) couplé à la mémoire (502), au processeur (501) et au communicateur (504) ; et
un gestionnaire de points divisés globaux (505) couplé à la mémoire (502), au processeur (501), au communicateur (504) et au dispositif de commande du dispositif fédéral (503),
dans lequel le dispositif fédéral (103) est configuré pour :
la réception des points divisés locaux associés à un modèle de réseau neuronal profond (DNN) sur une période de temps à partir de dispositifs clients (102a-102n) connectés au dispositif fédéral (103) pour l'entraînement du modèle DNN à l'aide d'un apprentissage fédéré divisé, SFL ;
la détermination d'une moyenne des points divisés locaux ;
la détermination d'un point divisé global pour la partition du modèle DNN entre les dispositifs clients (102) et un dispositif périphérique (101) à partir de la moyenne des points divisés locaux ; et
l'application du point divisé global déterminé pour l'entraînement du modèle DNN,
dans lequel le dispositif fédéral (103) est en outre configuré pour la détermination des points divisés locaux à partir d'une bande passante réseau pour la communication entre chacun des dispositifs clients (102) et le dispositif périphérique (101).

9. Système (100) pour l'exécution de l'apprentissage fédéré divisé optimal, O-SFL, dans un réseau sans fil, le système (100) comprenant :
un dispositif périphérique (101) ;
des dispositifs clients (102a-102n) ; et
le dispositif fédéral (103) selon la revendication 8.

10. Système (100) selon la revendication 9, dans lequel, pour la détermination du point divisé global, le dispositif fédéral (103) est en outre configuré pour :
l'envoi du point divisé global pour la partition du modèle DNN aux dispositifs clients (102) ;
la division uniforme d'une pluralité de couches du modèle DNN entre les dispositifs clients (102) et le dispositif périphérique (101), à partir du point divisé global ; et
le chargement d'un modèle DNN divisé correspondant sur les dispositifs clients (102) et le dispositif périphérique (101).

11. Système (100) selon la revendication 10, dans lequel le dispositif fédéral (103) est en outre configuré pour :
la division d'un ensemble de données d'entraînement entre les dispositifs clients (102) ; et
l'application du modèle DNN divisé correspondant en utilisant un ensemble de données d'entraînement divisé.

12. Système (100) selon la revendication 11, dans lequel chacun des dispositifs clients (102) est configuré pour :
l'exécution d'une propagation vers l'avant à l'aide de l'ensemble de données d'entraînement et du modèle DNN divisé correspondant ;
la détermination d'une sortie partielle du modèle DNN divisé correspondant à partir de la propagation vers l'avant ; et
l'envoi de la sortie partielle au dispositif périphérique (101).

13. Système (100) selon la revendication 12, dans lequel le dispositif périphérique (101) est configuré pour :
l'exécution d'une propagation vers l'avant pour l'application du point divisé global associé au modèle DNN et d'une propagation vers l'arrière à l'aide du modèle DNN divisé correspondant au niveau du dispositif périphérique (101) pendant l'entraînement du modèle DNN ; et
la mise à jour d'une pluralité de paramètres de modèle global associés au modèle DNN lors de l'entraînement du modèle DNN.

14. Système (100) selon la revendication 9, dans lequel le dispositif fédéral (103) est en outre configuré pour la sélection d'un codec optimal pour le déchargement des données des dispositifs clients (102) vers le dispositif périphérique (101), lorsque le point divisé global déterminé aboutit à un déchargement complet, le codec optimal étant sélectionné à partir de la bande passante réseau à l'aide d'un mécanisme de commutation de codec basée sur l'apprentissage par renforcement, RLCS, et
dans lequel chacun des dispositifs clients (102) est configuré pour le déchargement des données vers le dispositif périphérique (101) à l'aide du codec optimal sélectionné.
